# EUROPEAN PATENT SPECIFICATION

(11) **EP 2 660 512 B1**
(45) Date of publication and mention of the grant of the patent: **24.02.2021**
(21) Application number: 13166458.3
(22) Date of filing: 03.05.2013
(51) Int. Cl.: F22B 37/40, F22B 35/00

(54) **Enhanced flue gas damper mixing device**
Verbesserte Rauchgasdämpfermischvorrichtung
Dispositif de mélange d'amortisseur de gaz de carneau amélioré

(30) Priority: 05.05.2012 US 201213464963
(43) Date of publication of application: 06.11.2013
(73) Proprietor: General Electric Technology GmbH, 5400 Baden (CH)
(72) Inventor: Cohen, Mitchell B, West Hartford, CT Connecticut 06107 (US); Hellewell, Todd D, Windsor, CT Connecticut 06095 (US)
(74) Representative: BRP Renaud & Partner mbB Rechtsanwälte Patentanwälte Steuerberater

(56) References cited:
- EP-A1- 1 408 290
- GB-A- 662 721
- GB-A- 807 282
- US-A- 2 985 152
- US-A- 3 901 275
- US-A- 4 160 009
- US-A- 4 245 569
- US-A- 4 294 403
- US-A- 4 738 226
- US-A- 5 423 272

## Description

### BACKGROUND

The present disclosure discloses a device that efficiently mixes two flowing combustion gas streams and reduces gas backpressure under varying furnace loads.

It is common to mix gases of different temperatures in many applications, such as in boilers or steam generators. For example, all hot flue gases are passed through an economizer when the furnace of a boiler is operating at full load. The economizer recovers heat from the flue gases to preheat feed water that is circulated back into the boiler. The resulting flue gases exiting are cooler, due to the heat transfer. Therefore, the heat is recycled into the boiler, increasing boiler efficiency.

However, when the furnace/boiler is operating at a low load, if all of the flue gases are passed through the economizer, the temperature of the flue gases may drop below a critical temperature required for certain chemical processes, such as the catalytic removal of NO, NO₂ (collectively referred to as NOₓ) from the flue gases in a selective catalytic reduction ("SCR") system. Since the catalytic reactions are temperature dependent, the SCR must function within a specified temperature range in order to satisfactorily perform its required function.

Therefore, in low boiler load conditions, only a portion of the flue gases should pass through the economizer, and the remainder should bypass the economizer to maintain a higher temperature. These two gas streams are then mixed to result in flue gases within a required temperature range.

One way to regulate flue gas temperature is through the use of dampers and bypasses. A flue gas bypass allows a portion of the flue gas stream to bypass the economizer, with the remaining portion of flue gas stream being routed through the economizer. The streams are then mixed to result in a mixed stream that has a higher temperature than if all of the flue gases passed through the economizer.

Conventional boilers employ mixers with angled, fixed vanes. These mix the gas, but produce a pressure drop at all boiler loads. This pressure drop requires larger, more expensive fans and increased auxiliary power consumption.

Conventional mixers require a certain time period to mix the gases, under a given boiler load. This equates to a certain duct length (transition section) to sufficiently mix the flowing gas streams. There may be an excess of high temperature gases in contact with the surface of the flue duct causing 'hot spots'. The 'hot spots require high temperature metals, which are typically more expensive than standard metal. Longer transition sections add to the costs of the system. It would be beneficial to employ a device that would mix two flue gas streams more quickly, and after a shorter length down the flue gas duct. This would then shorten the transition section, thereby requiring less high temperature metal to construct the device.

Currently, there is a need for a simple and inexpensive device for mixing gases more efficiently that reduces the backpressure under various boiler loads.

The disclosure may be understood more readily by reference to the following detailed description of the various features of the disclosure and the examples included therein.

US 4,160,009 describes a boiler apparatus in which downstream of superheaters a common backpass for receiving flue gases from a furnace is divided into two flue gas channels. In each channel are disposed economizers and a denitrator. Exits of these two channels are connected independently from each other to a chimney. At the entrance and at the exit of each of the two channels are provided dampers. Obviously, each entrance damper comprises a plurality of louvers each having a louver vane pivotable on a pivot. Two bypass channels, each comprising a controllable valve, branch off from each of the two flue gas channels to establish communication between the upstream and downstream sides of one of the economizers.By closing the dampers of one of the two flue gas channels it is possible to carry out the cleaning of the denitrator without stopping the gas flow in the other flue gas channel.

When the temperature of the flue gases in one of the two flue gas channels downstream of one of the economizers and upstream of the denitrator is lower than the optimum reaction temperature of the denitrator adjustment is made by opening the corresponding bypass duct and by closing the entrance damper to a suitable degree. The flue gases having a high temperature are fed through the bypass duct and join with the low temperature flue gases which have already passed the economizer to raise their temperature.

A further boiler apparatus is described in GP 662 721. The described boiler comprises an upright combustion chamber and a plurality of heating tubes disposed vertically along at least two opposite walls of the chamber. Some of the tubes extend inwardly and outwardly from the walls toward the middle of the chamber and then substantially vertically upward so as to divide the chamber into a lower combustion chamber and an upper gas receiving chamber and to form in the gas receiving chambers parallel gas passes. Combustion gases leave the upper gas receiving chamber through sets of controlled dampers and serve to recover heat by means of economizer tubes.

US 4,294,403 describes a system for controlling the conditioning and delivery of air to a conditioned space, in which cold and warm air separately pass mechanically coupled discharge dampers.

US 4,245,569 describes a boiler having a gas scrubber incorporating a gas scrubber bypass duct. A self-actuating bypass damper is disposed in the bypass duct. The bypass damper comprises a pivotable plate. When the scrubber is taken out of service a scrubber booster fan is shut-down and the pivotable plate opens the bypass and thus prevents over-pressurization of a furnace of the boiler.

### SUMMARY OF THE INVENTION

The subject matter for which patent protection is sought is outlined in the appended claims.

### BRIEF DESCRIPTION OF THE DRAWINGS

Referring now to the figures wherein the like elements are numbered alike:
Figure 1 is a side elevational diagram of an economizer bypass arrangement employing the present invention;
Figure 2 is a plan view from above of one embodiment of a flue gas mixing device according to the present invention;
Figure 3 is a side elevational view of a cross section of the gas mixing device viewed along lines "III-III" of Fig. 2; and
Figure 4 is a side elevational view of a cross section of the gas mixing device viewed along lines "IV-IV" of Fig. 2.

### DETAILED DESCRIPTION

When the boiler is operating near full capacity, there is little or no gas flow through the bypass, there is effectively only a single gas stream and no need for mixing. As the boiler load decreases, increasing amount of flue gas must bypass the economizer to maintain the correct flue gas temperature, thereby creating two different gas streams. There is only need for gas mixing when there are at least two gas streams to be mixed. The prior art designs make no distinction between different boiler loads and are not adjustable. Therefore, they have a non-adjustable mixer that creates pressure drops under all boiler loads, with the highest pressure drop at the highest boiler load, where mixing is not needed.

The present invention provides minimal pressure drop when there is effectively only a single gas stream flowing. It also is adjustable to optimize mixing and minimize backpressure across the full operating range of the steam generator.

It employs a simple, lower cost louver damper design to operate as a gas mixer that will reduce system capital costs. This will eliminate the need for a separate mixer, and minimize gas backpressure and associated operating power costs.

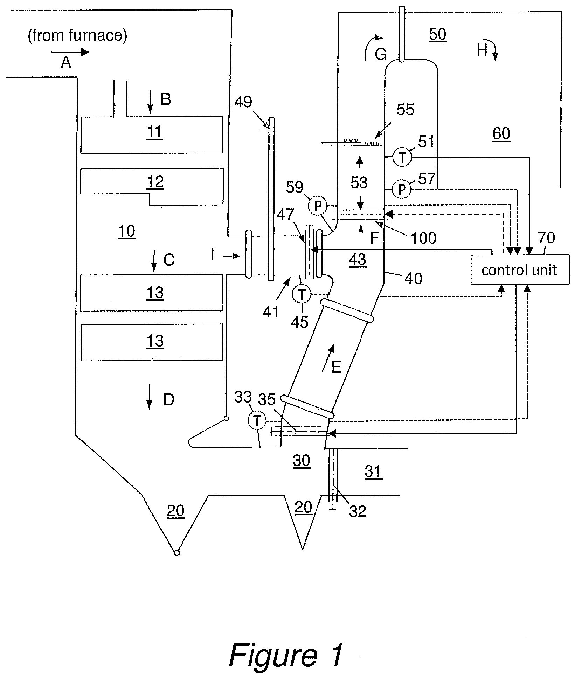

Figure 1 is a side elevational diagram of an economizer bypass arrangement employing the present invention.

Gases from combustion in a furnace indicated by arrow "A", enter a backpass 10 from the top of Figure 1 and move downward past superheaters 11 and reheaters 12 as shown by arrow "B". Heat from the hot flue gases is used to superheat steam in the superheaters 11 and reheat steam in the reheaters 12.

Under high boiler load conditions, most flue gases pass downward through the economizers as indicated by arrow "C". The flue gases transfer heat to feed water passing through tubes in the economizer 13, raising their temperature.

Ash in the flue gases continue downward as indicated by arrow "D". Ash is collected at the bottom of the backpass 10 and the lower flue section 30 in ash hoppers 20.

The flue gas continues through ductwork in a lower flue section 30 and upward as indicated by arrows "E" and "F" through a middle flue section 40 and an upper flue section 50, as indicated by arrow "G" to a selective catalytic reactor ("SCR") 70 as indicated by arrow H".

When the boiler is operating under lower loads, flue gases are passed through a bypass duct 41 as indicated by arrow "I" and though a T-section 43 into the middle flue section 40, mixing with the gases from the lower flue section 30.

When the SCR is not operating the inlet control damper 35 is closed and the flue duct stream enters an SCR bypass duct 31 bypassing the SCR 60. Optionally there may be an SCR bypass damper 32 that operates to open or close the SCR bypass duct 31.

The flow of flue gas through the bypass duct 41 is controlled by a bypass control damper 47. Similarly, the flow of flue gas through the lower flue section 30 is controlled by an inlet control damper 35.

A temperature sensor 51 at the upper flue section, downstream from the T-section 43, provides the flue gas temperature to a control unit 70. Based upon the sensed temperature, control unit 70 operates inlet control damper 35 and bypass control damper 47 to provide the proper mix to attain a desired mixed flue gas temperature at temperature sensor 51.

A mixing device is located downstream of the T-section 43. The present invention employs a damper mixing device 100 to more efficiently mix the flue gases from the economizer bypass duct 41 and the lower flue section 30.

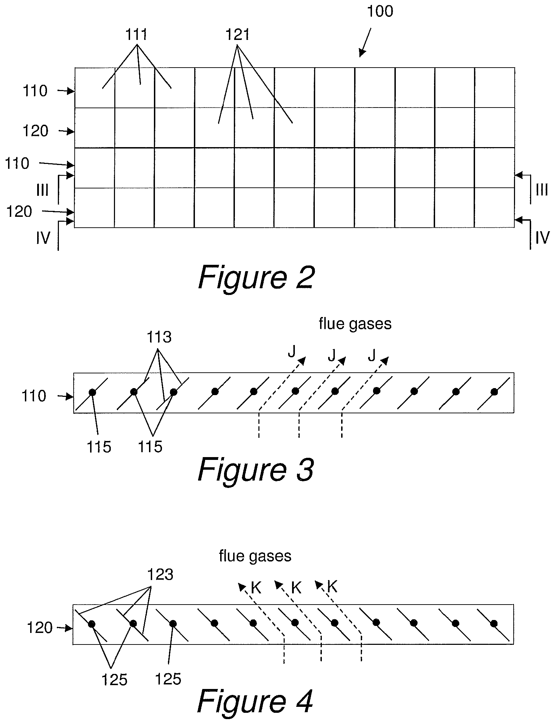

The damper mixing device 100, shown in Figure 2 is a louvered mixing device that efficiently mixes the two gas streams.

Figure 2 is a plan view of one embodiment of a damper mixing device 100 according to the present invention. The invention will be described with reference to both Figures 1 and 2. Figure 2 shows a cross section through the upper flue section 50 looking downward on the damper mixing device 100. There is a plurality of louvers 111, 121 in rows 110, 120 of the damper mixing device 100. In this embodiment, the louvers 111 of rows 110 operate together. Also, louvers 121 of rows 120 also operate together, but separately from rows 110.

Figure 3 is a side elevational view of a cross section of the damper mixing device 100 viewed along lines "III-III" of Fig. 2. Here, louvers 111 of row 110 are shown operating together. Each louver 111 has louver vanes 113 that pivot on pivots 115. Here they are pivoted to angle from bottom left to upper right. Flue gas passing upward through the louvers 111 are directed in the direction of arrows "J".

Figure 4 is a side elevational view of a cross section of the gas mixing device viewed along lines "IV-IV" of Fig. 2. Here, louvers 121 of row 120 are shown operating together. Each louver 121 has louver vanes 123 that pivot on pivots 125. Here they are pivoted to angle from bottom right to upper left. Flue gas passing upward through the louvers 121 are directed in the direction of arrows "K".

In an alternative embodiment, a temperature sensor 33 senses the flue gas temperature just upstream of the inlet control damper 35, and a temperature sensor 45 senses the flue gas temperature just upstream of the bypass control damper 47. Control unit 70 takes these into consideration when calculating how to control the inlet control damper 35 and the bypass control damper 47.

The interleaved rows 110, 120 cause turbulence in the flue gases mixing them. Control unit 70 operates the pivoting of the louvers 111, 121. Control unit 70 also has information on the temperatures of the flue gas the in the upper flue section 50 (and optionally, near the inlet control damper 35 and the bypass control damper 47). Control unit 70 also has information on the opening of bypass control damper 47 and inlet control damper 35. Therefore, control unit can use this information to calculate the angle positions for the louvers 111 and 121.

If for example, bypass control damper 47 is closed, then there is only a single stream of flue gas from the lower flue section 30. All louvers 111, 121 are then set to a vertical position, parallel with the gas stream flow at this location, minimizing the pressure drop across the damper mixing device 100. Similarly, if all of the flue gas is passing through the bypass duct 41, then again, the louvers 111, 121 are again set to a vertical position, again the minimizing pressure drop. The control unit 70 also adjusts the opening of the louvers 111, 121 based upon the relative openings of the bypass control damper 47, the inlet control damper 35, and the sensed temperatures to maximize mixing, while minimizing backpressure.

The damper mixing device 100 can be modulated to effectively enhance the thermal mixing of two gas streams in a shorter distance than conventional static mixers. This is accomplished by regulating the angle of each row 110, 120 of louvers to create turbulent mixing as required.

In another embodiment of the present invention, temperature sensor 51 employs a plurality of temperature sensors which measure temperature across the upper flue section 50. It also has gas pressure sensors just upstream and downstream of the damper mixing device 100 to measure pressure drop across the damper mixing device.

Therefore, control unit 70 can iterative try various angle settings of the louvers 111, 121 and measure the temperature across the upper flue section 50 and associate pressure drop across the damper mixing device. Therefore, there will be combinations of louver settings that will optimize the combination of pressure drop and temperature homogeneity.

Another use of the damper mixing device 100 would be to improve flow distribution downstream into an ammonia injection grid 55, used for uniform injection of ammonia that reacts with NOₓ in the presence of the catalyst in the SCR 60 to reduce the NOₓ to nitrogen and water vapor.

In another alternative embodiment, the present invention can be used in oxy-combustion. Oxy-combustion is the process of burning fuel in a substantially nitrogen-free environment to produce a flue gas that is substantially CO₂ and water vapor. Wherein the CO₂ may be separated from the water vapor and the CO₂ sequestered and stored.

The present invention can be used to mix oxygen streams into recirculated flue gas stream to provide a uniform distribution of oxygen into the mixed streams.

The present invention overcomes the problems noted in the prior art. Therefore, the simple louver design is expected to be a cost saving above the prior art gas mixer designs. The adjustable louver design minimizes pressure drop for high boiler loads. This reduces the need for larger and more expensive fans and blower equipment.

The flue gases mix faster and in a shorter transition area downstream from the damper mixing device 100. This requires less high temperature material and is less costly to construct.

An additional advantage is that the damper mixing device 100 can close all louvers 111, 121 to provide additional flue gas shutoff capability when system is not in operation, such as shutting off flue gases to an SCR when it is not in operation.

Unless otherwise specified, all ranges disclosed herein are inclusive and combinable at the end points and all intermediate points therein. The terms "first," "second," and the like, herein do not denote any order, quantity, or importance, but rather are used to distinguish one element from another. The terms "a" and "an" herein do not denote a limitation of quantity, but rather denote the presence of at least one of the referenced item. All numerals modified by "about" are inclusive of the precise numeric value unless otherwise specified.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A flue gas duct system having a backpass (10) for receiving flue gases from a furnace that operates under various loads, comprising:
at least one heat exchanger (11, 12, 13) within the backpass (10) functioning to extract heat from the flue gases;
a lower flue section being a first flue gas conduit (30) coupled to the outlet of the backpass (10) adapted to receive the flue gases;
an upper flue section being a second flue gas conduit (50) connected to downstream flue gas processing devices;
a middle flue section being a third flue gas conduit (40) for conveying the flue gases from the first flue gas conduit (30) to the second flue gas conduit (50) ;
a bypass being a fourth flue gas conduit (41) connected to the backpass (10) upstream of economizers (13), and connected through a T-section (43) to the third flue gas conduit (40);
an inlet control damper (35) within the first flue gas conduit (30), adapted to adjust the amount of flue gases that flow from the first flue gas conduit (30) to the second flue gas conduit (50);
a bypass control damper (47) within the fourth flue gas conduit (41), adapted to control the amount of flue gases passing from the backpass (10) to the third flue gas conduit (40), thereby bypassing the economizers (13);
a mixing device (100) for mixing a first flue gas stream (E) passing the first flue gas conduit (30) and a second flue gas stream (I) passing the fourth flue gas conduit (41) in a flue gas conduit; and
a control device (70) coupled to the inlet control damper (35) and to the bypass control damper (47);
**characterized in that** the mixing device is a damper mixing device (100) which is disposed in a flue gas conduit downstream the T-section (43) and comprises:
a first set of a plurality of louvers (111) arranged in first rows (110) each louver (110) having adjustable louver vanes (113) pivotable on a pivot (115), the adjustable louver vanes (113) being positioned in a first direction when the first (E) and the second flue gas stream (I) are being received, causing flue gases passing through the adjustable louver vanes (113) to be mixed and positioned in a second direction parallel with the gas stream flow when effectively only the first (E) or the second (I) flue gas stream is being received;
a second set of a plurality of louvers (121) arranged in second rows (120), each louver (121) having adjustable louver vanes (123) pivotable on a pivot (125), the adjustable louver vanes (123) being positioned in a direction different from the first direction when the first (E) and the second flue gas streams (I) are being received, causing flue gases passing through the adjustable louver vanes (123) to be mixed, and positioned in the second direction parallel with the gas stream flow when effectively only the first (E) or the second (I) flue gas stream is being received;
wherein one of the second rows (120) is interleaved adjacent with two first rows (110); and wherein the control unit (70) is connected to the louvers (111, 121).

2. The device of claim 1, wherein the control unit (70) is adapted to angle all of the louvers (111, 121) of a given row at the same angle when the first (E) and the second gas stream (I) are being received.

3. The device of claim 1, wherein the control unit (70) is adapted to angle all louvers (121) of the one of second row (120) in a same direction that is opposite the angle of all louvers (111) of the two first rows (110), when the first (E) and the second gas stream (I) are being received.

4. The device of claim 1, further comprising:
a top temperature sensor (51) in the second flue conduit (50) coupled to the control unit (70) for measuring temperature in the second flue conduit (50) allowing the control unit (70) to determine an amount to open inlet control damper (35) and bypass control damper (47),
a bottom temperature sensor (33) just upstream of the inlet control damper (35), connected to the control unit (70), to provide a temperature of the flue gases in the first flue conduit (30), and
a bypass temperature sensor (45) just upstream of the bypass control damper (47), connected to the control unit (70), to provide a temperature of the flue gases in the bypass duct (41).

5. The device of claim 1, further comprising:
a first pressure sensor (59) just upstream of the damper control mixing device (100), and
a second pressure sensor (57) just downstream of the damper control mixing device (100), the pressure sensors (57, 59) acting to measure pressure drop across the damper control mixing device (100) and provide their pressure drop measurement to control unit (70).

6. The device of claim 1 wherein the louvers (111, 121) within a row (110, 120) may be adjusted to different angles.

7. The device of claim 1 wherein the first (E) and the second gas stream (I) are flue gases from combusting a fuel in a nitrogen-free environment.

## Patentansprüche

1. Rauchgaskanalsystem mit einem Rücklauf (10) zum Empfangen von Rauchgasen aus einem Ofen, der mit verschiedenen Lasten arbeitet, umfassend:
mindestens einen Wärmetauscher (11, 12, 13) innerhalb des Rücklaufs (10), der dazu dient, den Rauchgasen Wärme zu entziehen;
einen unteren Rauchgasabschnitt, bei dem es sich um einen ersten Rauchgaskanal (30) handelt, der mit dem Auslass des Rücklaufs (10) gekoppelt ist und zum Empfangen der Rauchgase geeignet ist;
einen oberen Rauchgasabschnitt, bei dem es sich um einen zweiten Rauchgaskanal (50) handelt, der mit stromabwärts angeordneten Rauchgasverarbeitungsvorrichtungen verbunden ist;
einen mittleren Rauchgasabschnitt, bei dem es sich um einen dritten Rauchgaskanal (40) handelt, um die Rauchgase von dem ersten Rauchgaskanal (30) zu dem zweiten Rauchgaskanal (50) zu leiten;
eine Umgehung, bei der es sich um einen vierten Rauchgaskanal (41) handelt, der mit dem Rücklauf (10) stromaufwärts von Economizern (13) verbunden ist und über einen T-Abschnitt (43) mit dem dritten Rauchgaskanal (40) verbunden ist;
einen Einlassregelungsdämpfer (35) innerhalb des ersten Rauchgaskanals (30), der geeignet ist, die Menge der Rauchgase, die von dem ersten Rauchgaskanal (30) zu dem zweiten Rauchgaskanal (50) strömen, einzustellen;
einen Umgehungsregelungsdämpfer (47) innerhalb des vierten Rauchgaskanals (41), der geeignet ist, die Menge der Rauchgase zu regeln, die von dem Rücklauf (10) zu dem dritten Rauchgaskanal (40) strömen, wodurch die Economizer (13) umgangen werden;
eine Mischvorrichtung (100) zum Mischen eines ersten Rauchgasstroms (E), der den ersten Rauchgaskanal (30) passiert, und eines zweiten Rauchgasstroms (I), der den vierten Rauchgaskanal (41) passiert, in einem Rauchgaskanal; und
eine Steuervorrichtung (70), die mit dem Einlassregelungsdämpfer (35) und mit dem Umgehungsregelungsdämpfer (47) gekoppelt ist;
**dadurch gekennzeichnet, dass** die Mischvorrichtung eine Dämpfermischvorrichtung (100) ist, die in einem Rauchgaskanal stromabwärts des T-Abschnitts (43) angeordnet ist und Folgendes umfasst:
einen ersten Satz einer Vielzahl von Lamellen (111), die in ersten Reihen (110) angeordnet sind, wobei jede Lamelle (110) einstellbare Lamellenschaufeln (113) aufweist, die auf einem Drehzapfen (115) schwenkbar sind, wobei die einstellbaren Lamellenschaufeln (113) in einer ersten Richtung positioniert sind, wenn der erste (E) und der zweite Rauchgasstrom (I) empfangen werden, wodurch Rauchgase, die durch die einstellbaren Lamellenschaufeln (113) strömen, gemischt werden, und in einer zweiten Richtung parallel zum Gasstrom positioniert sind, wenn effektiv nur der erste (E) oder der zweite (I) Rauchgasstrom empfangen wird;
einen zweiten Satz einer Vielzahl von Lamellen (121), die in zweiten Reihen (120) angeordnet sind, wobei jede Lamelle (121) einstellbare Lamellenschaufeln (123) aufweist, die auf einem Drehzapfen (125) schwenkbar sind, wobei die einstellbaren Lamellenschaufeln (123) in einer Richtung positioniert sind, die sich von der ersten Richtung unterscheidet, wenn der erste (E) und der zweite Rauchgasstrom (I) empfangen werden, wodurch Rauchgase, die durch die einstellbaren Lamellenschaufeln (123) strömen, gemischt werden, und in der zweiten Richtung parallel zu dem Gasstrom positioniert werden, wenn effektiv nur der erste (E) oder der zweite (I) Rauchgasstrom empfangen wird;
wobei eine von den zweiten Reihen (120) benachbart mit zwei ersten Reihen (110) verschachtelt ist; und wobei die Steuereinheit (70) mit den Lamellen (111, 121) verbunden ist.

2. Vorrichtung nach Anspruch 1, wobei die Steuereinheit (70) so ausgelegt ist, dass sie alle Lamellen (111, 121) einer gegebenen Reihe im gleichen Winkel abwinkelt, wenn der erste (E) und der zweite Gasstrom (I) empfangen werden.

3. Vorrichtung nach Anspruch 1, wobei die Steuereinheit (70) so ausgelegt ist, dass sie alle Lamellen (121) der einen der zweiten Reihe (120) in eine gleiche Richtung abwinkelt, die dem Winkel aller Lamellen (111) der beiden ersten Reihen (110) entgegengesetzt ist, wenn der erste (E) und der zweite Gasstrom (I) empfangen werden.

4. Vorrichtung nach Anspruch 1, ferner umfassend:
einen oberen Temperatursensor (51) in dem zweiten Rauchgaskanal (50), der mit der Steuereinheit (70) gekoppelt ist, um die Temperatur in dem zweiten Rauchgaskanal (50) zu messen, wodurch es der Steuereinheit (70) ermöglicht wird, einen Betrag zum Öffnen des Einlassregelungsdämpfers (35) und des Umgehungsregelungsdämpfers (47) zu bestimmen,
einen unteren Temperatursensor (33) unmittelbar stromaufwärts des Einlassregelungsdämpfers (35), der mit der Steuereinheit (70) verbunden ist, um eine Temperatur der Rauchgase in dem ersten Rauchgaskanal (30) bereitzustellen, und
einen Umgehungstemperatursensor (45) unmittelbar stromaufwärts des Umgehungsregelungsdämpfers (47), der mit der Steuereinheit (70) verbunden ist, um eine Temperatur der Rauchgase in dem Umgehungskanal (41) bereitzustellen.

5. Vorrichtung nach Anspruch 1, ferner umfassend:
einen ersten Drucksensor (59) unmittelbar stromaufwärts der Dämpferregelungsmischvorrichtung (100), und
einen zweiten Drucksensor (57) unmittelbar stromabwärts der Dämpferregelungsmischvorrichtung (100), wobei die Drucksensoren (57, 59) zum Messen des Druckabfalls über die Dämpferregelungsmischvorrichtung (100) dienen und ihre Druckabfallmessung der Steuereinheit (70) bereitstellen.

6. Vorrichtung nach Anspruch 1, wobei die Lamellen (111, 121) innerhalb einer Reihe (110, 120) auf verschiedene Winkel eingestellt werden können.

7. Vorrichtung nach Anspruch 1, wobei der erste (E) und der zweite Gasstrom (I) Rauchgase aus der Verbrennung eines Brennstoffs in einer stickstofffreien Umgebung sind.

## Revendications

1. Système de conduites de gaz de combustion ayant un retrait (10) pour recevoir les gaz de combustion provenant d'un four qui fonctionne sous diverses charges, comprenant :
au moins un échangeur de chaleur (11, 12, 13) à l'intérieur du retrait (10) fonctionnant pour extraire de la chaleur des gaz de combustion ;
une section de combustion inférieure étant une première conduite de gaz de combustion (30) couplé à la sortie du retrait (10) adapté pour recevoir les gaz de combustion ;
une section de combustion supérieure étant une deuxième conduite de gaz de combustion (50) reliée aux dispositifs de traitement des gaz de combustion en aval ;
une section de combustion intermédiaire étant une troisième conduite de gaz de combustion (40) pour transporter les gaz de combustion à partir de la première conduite de gaz de combustion (30) à la deuxième conduite de gaz de combustion (50) ;
une dérivation étant une quatrième conduite de gaz de combustion (41) reliée au retrait (10) en amont des économiseurs (13), et reliée par l'intermédiaire d'une section en T (43) à la troisième conduite de gaz de combustion (40) ;
un amortisseur de commande d'entrée (35) à l'intérieur de la première conduite de gaz de combustion (30), adapté pour ajuster la quantité de gaz de combustion qui s'écoulent de la première conduite de gaz de combustion (30) à la deuxième conduite de gaz de combustion (50) ;
un amortisseur de commande de dérivation (47) à l'intérieur de la quatrième conduite de gaz de combustion (41), adapté pour contrôler la quantité de gaz de combustion passant du retrait (10) vers la troisième conduite de gaz de combustion (40), contournant de ce fait les économiseurs (13) ;
un dispositif de mélange (100) pour mélanger un premier flux de gaz de combustion (E) passant dans la première conduite de gaz de combustion (30) et un second flux de gaz de combustion (I) passant dans la quatrième conduite de gaz de combustion (41) dans une conduite de gaz de combustion ; et
un dispositif de commande (70) couplé à l'amortisseur de commande d'entrée (35) et à l'amortisseur de commande de dérivation (47) ;
**caractérisé en ce que** le dispositif de mélange est un dispositif de mélange d'amortisseur (100) qui est disposé dans une conduite de gaz de combustion en aval de la section en T (43) et comprend :
un premier ensemble d'une pluralité de persiennes (111) disposées en premières rangées (110) chaque persienne (110) ayant des ailettes (113) de persienne ajustables pouvant pivoter sur un pivot (115), les ailettes (113) de persienne ajustables étant positionnées dans une première direction lorsque le premier (E) et le second (I) flux de gaz de combustion sont reçus, amenant les gaz de combustion passant à travers les ailettes (113) de persienne ajustables à être mélangés et positionnés dans une seconde direction parallèle à l'écoulement de gaz de combustion lorsqu'effectivement seul le premier (E) ou le second (I) flux de gaz de combustion est reçu ;
un second ensemble d'une pluralité de persiennes (121) disposées en secondes rangées (120), chaque persienne (121) ayant des ailettes (123) de persienne ajustables pouvant pivoter sur un pivot (125), les ailettes (123) de persienne ajustables étant positionnées dans une direction différente de la première direction lorsque le premier (E) et le second (I) flux de gaz de combustion sont reçus, amenant les gaz de combustion passant à travers les ailettes (123) de persienne ajustables à être mélangés, et positionnés dans la seconde direction parallèle à l'écoulement du flux de gaz de combustion lorsqu'effectivement seul le premier (E) ou le second (I) flux de gaz de combustion est reçu ;
dans lequel l'une des secondes rangées (120) est entrelacée de manière adjacente avec deux premières rangées (110) ; et dans lequel l'unité de commande (70) est connectée aux persiennes (111, 121).

2. Dispositif selon la revendication 1, dans lequel l'unité de commande (70) est adaptée pour incliner l'ensemble des persiennes (111, 121) d'une rangée donnée selon le même angle lorsque le premier (E) et le second (I) flux de gaz sont reçus.

3. Dispositif selon la revendication 1, dans lequel l'unité de commande (70) est adaptée pour incliner toutes les persiennes (121) de l'une de la seconde rangée (120) dans une même direction qui est opposée à l'angle de toutes les persiennes (111) des deux premières rangées (110), lorsque le premier (E) et le second (I) flux de gaz sont reçus.

4. Dispositif selon la revendication 1, comprenant en outre :
un capteur de température supérieur (51) dans la deuxième conduite de combustion (50) couplée à l'unité de commande (70) pour mesurer la température dans la deuxième conduite de combustion (50) permettant à l'unité de commande (70) de déterminer une quantité pour ouvrir l'amortisseur de commande d'entrée (35) et l'amortisseur de commande de dérivation (47),
un capteur de température inférieur (33) juste en amont de l'amortisseur de commande d'entrée (35), relié à l'unité de commande (70), pour fournir une température des gaz de combustion dans la première conduite de combustion (30), et
un capteur de température de dérivation (45) juste en amont de l'amortisseur de commande de dérivation (47), connecté à l'unité de commande (70), pour fournir une température des gaz de combustion dans le conduit de dérivation (41).

5. Dispositif selon la revendication 1, comprenant en outre :
un premier capteur de pression (59) juste en amont du dispositif de mélange de commande d'amortisseur (100), et
un second capteur de pression (57) juste en aval du dispositif de mélange de commande d'amortisseur (100), les capteurs de pression (57, 59) agissant pour mesurer la chute de pression à travers le dispositif de mélange de commande d'amortisseur (100) et fournir leur mesure de chute de pression à l'unité de commande (70).

6. Dispositif selon la revendication 1 dans lequel les persiennes (111, 121) à l'intérieur d'une rangée (110, 120) peuvent être ajustées selon différents angles.

7. Dispositif selon la revendication 1 dans lequel le premier (E) et le second (I) flux de gaz sont des gaz de combustion provenant de la combustion d'un carburant dans un environnement exempt d'azote.
